# EUROPEAN PATENT APPLICATION

(11) **EP 3 690 431 A1**
(43) Date of publication of application: **05.08.2020**
(21) Application number: 19155343.7
(22) Date of filing: 04.02.2019
(51) Int. Cl.: G01N 25/72, F25D 23/06

(54) **METHOD AND SYSTEM FOR DETECTING DEFECTS IN AN INSULATION PANEL**

(71) Applicant: Covestro Deutschland AG, 51373 Leverkusen (DE)
(72) Inventor: GAO, Jianwu, China 201901 (CN); Li, Liqiang, Pudong, Shangai, China 200120 (CN); GAO, Sean, 201208 Shanghai (CN)
(74) Representative: Levpat

(57) **Abstract**

The invention is directed at a method for detecting defects (4) in an insulation panel (1), wherein the insulation panel (1) is produced, which production of the insulation panel (1) comprises injecting a precursor mixture for creating a solid foam interior (3) into a shell (2) of the insulation panel (1), wherein after injecting the precursor mixture into the shell (2) infrared image data of the shell (2) is captured by a recording apparatus (5) and saved in a mobile device (7), which infrared image data is for determining a distribution of the solid foam interior (3) in the shell (2), wherein the infrared image data is analyzed for generating a defect detection result (10) and wherein the defect detection result (10) is output. The invention is also directed at a system for detecting defects (4) in an insulation panel (1).

## Description

The invention is directed at a method for detecting defects in an insulation panel and at a system for detecting defects in an insulation panel.

Insulation panels are nowadays used for a variety of application purposes. In particular, by providing rigid structures with thermal insulation, they make it possible to construct refrigerated containers, which are also called reefers. Such refrigerated containers allow the bulk transport of refrigerated goods over great distances and have thereby revolutionized the logistics in particular of perishable food. In order for the thermal insulation to be effective, it is desired that the insulation panel, which comprises a polyurethane core, be homogeneous and without substantial defects. Such defects often present themselves as voids in the polyurethane foam. Because the insulation panels have a thickness which is not negligible, such voids are often within the body of the insulation panel and therefore not at its surface. In this case, a non-destructive visual inspection of the insulation panel is not suitable for identifying any voids within the insulation panel. Further, since the polyurethane core is created by injection molding into a shell, which shell then surrounds the polyurethane interior, any irregularities even at the boundary of the polyurethane interior will not be visible due to the surrounding shell. Because the insulation panels for refrigerated containers are very large, an automated defect detection would require very large and expensive machinery for handling the insulation panel, which is often not available when such an inspection of the insulation panel is desired.

Therefore the object of the invention is to provide a method and a system for detecting defects in an insulation panel which is very cost-effective and does not require large or expensive equipment.

With respect to a method for detecting defects in an insulation panel, the object of the invention is achieved through a method for detecting defects in an insulation panel according to claim 1. With respect to a system for detecting defects in an insulation panel, the object of the invention is achieved through a system for detecting defects in an insulation panel according to claim 15.

The invention is based on the recognition that the foaming reaction in which the precursor mixture becomes the solid foam interior is exothermic. Because the solid foam interior retains the heat thus generated for some time, a heat distribution of the solid foam interior can be analyzed. Any inhomogeneities in that heat distribution may be indicative of voids and therefore of defects in the solid foam interior. Further, since the shell of the insulation panel can generally absorb the heat of the solid foam interior, the presence of the shell does not block recording of the heat distribution.

Nowadays mobile devices such as smart phones are almost ubiquitously carried by persons while working. Due to the increasing image capture and computation capabilities of mobile devices and in particular smartphones, only little and comparatively affordable external hardware, if any, is required for optically capturing and analyzing the heat distribution of the solid foam interior with such a mobile device. Thus a defect inspection can be performed on the spot with usually very little extra hardware required.

The method according to the invention is for detecting defects in an insulation panel. In the method according to the invention, the insulation panel is produced, which production of the insulation panel comprises injecting a precursor mixture for creating a solid foam interior into a shell of the insulation panel. In other words, the insulation panel comprises a shell into which precursor mixture is injected. The precursor mixture reacts to create a solid foam interior within the shell. The reaction of the precursor mixture is exothermic. The solid foam interior may substantially consist of polyurethane. Accordingly, it is preferred that the precursor mixture comprises an isocyanate and a polyol. The precursor mixture may also comprise water and/or a blowing agent.

In the method according to the invention, after injecting the precursor mixture into the shell infrared image data of the shell is captured by a recording apparatus and saved in a mobile device. Because the solid foam interior has been created by the exothermic reaction from the precursor mixture within the shell, the heat of the solid foam interior is at least partially transferred to the shell. Preferably, the temperature of the solid foam interior when capturing the infrared image data of the shell is at least 120° C. In particular, the temperature of the solid foam interior when capturing the infrared image data of the shell may reach 150° C. Due to the above heat transfer, it may be that the temperature of the shell when capturing the infrared image of the shell is at least 60° C. In particular, the temperature of the shell when capturing the infrared image data of the shell may reach 70° C.

Thus, the infrared image data of the shell is related to the heat distribution in the solid foam interior. The mobile device can be any kind of mobile electronic device. Saving the infrared image data in the mobile device may be any kind of, potentially only temporary, storage of the infrared image data in the memory of the mobile device.

In the method according to the invention, the infrared image data is for determining a distribution of the solid foam interior in the shell, the infrared image data is analyzed for generating a defect detection result and the defect detection result is output. The outputting may in principle be done by an arbitrary output mechanism. The defect detection result is configured to provide information about the occurrence of defects in the solid foam interior of the insulation panel. In other words, the defect detection result is such that qualitative or quantitative information about the presence of defects in the solid foam interior is provided.

The mobile device may be a portable mobile device. In particular, the mobile device may be a mobile device configured for wireless communication and/or configured for cellular communication. The mobile device may be a mobile phone. In a preferred embodiment of the method according to the invention, the mobile device is a smartphone. Here it is further preferred that the recording apparatus is a camera of the mobile device. In particular, the recording apparatus may be an integral camera of the mobile device. In this case, generally no additional camera is required for capturing the infrared image data.

In principle, the shell may comprise any material or combination of materials. In particular, the shell may be of metal. In a preferred embodiment of the invention, the shell is of non-metal material. This has the advantage that the thermal conductivity of the shell is low enough to prevent the shell from reaching a uniform temperature distribution in a short time. In other words, a smaller degree of thermal conductivity is useful for maintaining the inhomogeneity in temperature which is necessary defect detection.

In a further preferred embodiment of the method according to the invention, the recording apparatus is separate from the mobile device. This, the recording apparatus is additional hardware with respect to the mobile device. Here it is further preferred that the recording apparatus is an external camera for connection to the mobile device. This connection to the mobile device is a connection for signal transmission.

In principle, this connection to the mobile device may be any kind which is suitable for signal transmission. A preferred embodiment of the method according to the invention is characterized in that the recording apparatus is releasably connected to the mobile device. Thus there is a physical connection between the recording apparatus and the mobile device which may be released. Here it is preferred that the recording apparatus is electrically connected to a port arrangement of the mobile device, wherein the port arrangement is for connecting external devices to the mobile device. In particular, the recording apparatus may be electrically connected to the port arrangement via a cable, preferably of the mobile device, for connection to the port arrangement.

A further preferred embodiment of the method according to the invention is characterized in that the recording apparatus comprises a camera for recording in the infrared range. Preferably, the recording apparatus generates the infrared image data and transfers the infrared image data to the mobile device. In particular, it may be that the infrared image data is transferred to the mobile device via the port arrangement. It may also be that the camera comprises a thermography lens.

It may also be that the recording apparatus comprises a camera for recording in the visible range. Such a camera may be used for capturing infrared image data by applying an infrared pass filter. Such a filter blocks light outside the infrared spectrum. The camera for recording in the visible range may have sufficient sensitivity in the infrared range also. Therefore, applying such a filter to the recording apparatus may provide a workable conversion to an infrared camera. Accordingly, it may be that the mobile device comprises an infrared pass filter, preferably external, applied to the recording apparatus and in particular to a lens of the recording apparatus.

According to a preferred embodiment of the method according to the invention, the recording apparatus transfers the infrared image data to the mobile device via a wireless connection. Here it is preferred that the wireless connection is established by a wireless personal area network. The wireless personal area network may be a Bluetooth network. Using a wireless communication requires even less external hardware.

The analysis of the infrared image data may in principle be performed on any computing apparatus and by an arbitrary computer program or software module. In a further preferred embodiment of the method according to the invention, a mobile application executed on the mobile device analyzes the infrared image data and generates the defect detection result. Advances in the computing power of mobile devices mean that such calculations can be performed efficiently within the mobile device itself. The information in the defect detection result may in principle of any nature and have an arbitrary specificity and precision. It is preferred that the defect detection result comprises a void location information and a void size information. As for the analysis, also the outputting of the defect detection result may be performed by any device or computer program. In particular, it may be that the defect detection result is output by the mobile device.

A preferred embodiment of the method according to the invention is characterized in that the mobile device transmits the infrared image data to a remote computer server and that a server application executed on the remote computer server analyzes the infrared image data and generates the defect detection result. It is preferred that the mobile device transmits the infrared image data to the remote computer server via a mobile data connection. In this way, even greater computing and potentially also data resources may be used for the analysis and the generation of the defect detection results. The remote computer server may also form a cloud computing system or be a part of such a cloud computing system. Those results may then be sent back to the mobile device. Accordingly, it is preferred that the defect detection result is received by the mobile device from the remote computer server. In particular, the defect detection result may be received by the mobile device via the mobile data connection.

In principle, the infrared image data may consist of a single infrared image. A further preferred embodiment of the method according to the invention is characterized in that the infrared image data comprises a plurality of infrared images. Here it is preferred that the plurality of infrared images is successively captured by the recording apparatus. Additional images increase the data available for analysis and may thereby provide more precise defect detection results. In addition, the homogeneity of the solid foam interior may not only determine the heat distribution on the shell of the insulation panel at one specific point in time, but may also affect the temporal progress of the heat distribution. In other words, the increase in temperature as distributed on the shell as well as the subsequent decrease in temperature - the cooling off - as distributed on the shell may also provide valuable information on the presence and nature of defects in the solid foam interior. Here it is preferred that the plurality of infrared images is captured over a period of time which is at least 5 minutes.

It may also be important when in relation to the injection process the infrared image data is captured. According to a preferred embodiment of the method according to the invention, the infrared image data is recorded at a recording time which recording time is between 2 minutes and 20 minutes after injecting the precursor mixture. This means that at least some infrared image data is recorded such that the recording time is between 2 minutes and 20 minutes. In other words, there may be additional infrared image data recorded which is outside the time window from 2 minutes after injecting the precursor mixture and 20 minutes after injecting the precursor mixture. It has been found that in this time window the heat distribution on the shell is particularly relevant for determining the presence of defects. It may also be that the recording time is between 3 and 15 minutes after injecting the precursor mixture.

Outputting the defect detection result may be in principle be performed by any device. According to a further preferred embodiment of the method according to the invention outputting the defect detection result comprises generating a visual output of the defect detection result on a display apparatus of the mobile device.

In this way, a person performing the inspection with the mobile device may quickly obtain the results of the inspection without needing additional hardware. It may also be that outputting the defect detection result comprises transmitting the defect detection result to a remote computer. Thus the defect detection result may be added to a database and further processed, e.g. statistically. Preferably, the defect detection result is transmitted to the remote computer wirelessly. Such a wireless transmission also comprises the cases in which only a part of the transmitting occurs via a wireless connection. This remote computer may be identical to or comprised by the remote computer server mentioned before. The remote computer may also be a computer distinct from the remote computer server. The remote computer may also consist of or be a part of a cloud computing system.

A preferred embodiment of the method according to the invention is characterized in that the defect detection result is associated with product information associated with the insulation panel, which product information comprises precursor information describing production properties of the precursor mixture. Preferably, the precursor information is generated during a precursor production process of the precursor mixture. In this way, it may be determined whether specific production properties of the precursor - i.e. the precursor mixture - correlate or otherwise influence with the number and quality of defects in the solid foam interior of the insulation panel. The production properties of the precursor mixture may comprise properties of base materials used in the production of the precursor mixture. Further, the production properties of the precursor mixture may comprise machine settings applied in the production of the precursor mixture. The production properties of the precursor mixture may also comprise production data measured during the production of the precursor mixture. Associating the defect detection results with the product information may in principle be performed by any device. It is preferred that the defect detection result is associate by the remote computer with the product information. Such a remote computer may be able to combine and analyze the defect detection results and the product information of a large number of insulation panels, thereby permitting more precise results of analyses of the defect detection results.

A further preferred embodiment of the invention is characterized in that the product information comprises injection process information describing injection process properties obtained during the injection of the precursor mixture. The injection process properties may comprise machine settings for the injection process. Alternatively or in addition, the injection process properties may comprise injection process data measured during the injection of the precursor mixture. In this way also the injection process may be correlated to the occurrence of defects in the insulation panel.

In principle, the insulation panel may be a stand-alone device or may be a component of a larger device. According to a preferred embodiment of the invention, the insulation panel is an insulation panel for a refrigerated container. Here in particular, the insulation panel may be comprised by a refrigerated container, which refrigerated container comprises a plurality of insulation panels.

The system according to the invention is for detecting defects in an insulation panel. The system according to the invention comprises an insulation panel with a solid foam interior, which solid foam interior has been created by injecting a precursor mixture into a shell of the insulation panel. The system according to the invention further comprises a recording apparatus for capturing infrared image data of the shell after injecting the precursor mixture into the shell, which infrared image data is for determining a distribution of the solid foam interior in the shell. The system according to the invention further comprises a mobile device in which the captured infrared image data is stored.

According to a preferred embodiment of the system according to the invention, a mobile application executed on the mobile device is configured to analyze the infrared image data and to generate a defect detection result. According to a further preferred embodiment, the mobile device is configured to output the defect detection result.

According to a further preferred embodiment of the system according to the invention, the system comprises a remote computer server. Preferably, a server application executed on the remote computer server is configured to analyze the infrared image data and to generate the defect detection result.

A preferred embodiment of the system according to the invention is characterized in that the system comprises a remote computer. Preferably, the mobile device is configured to output the defect detection result by transmitting the defect detection result to the remote computer.

Features, properties and preferred embodiments of the method according to the invention correspond to those of the system according to the invention and vice versa.

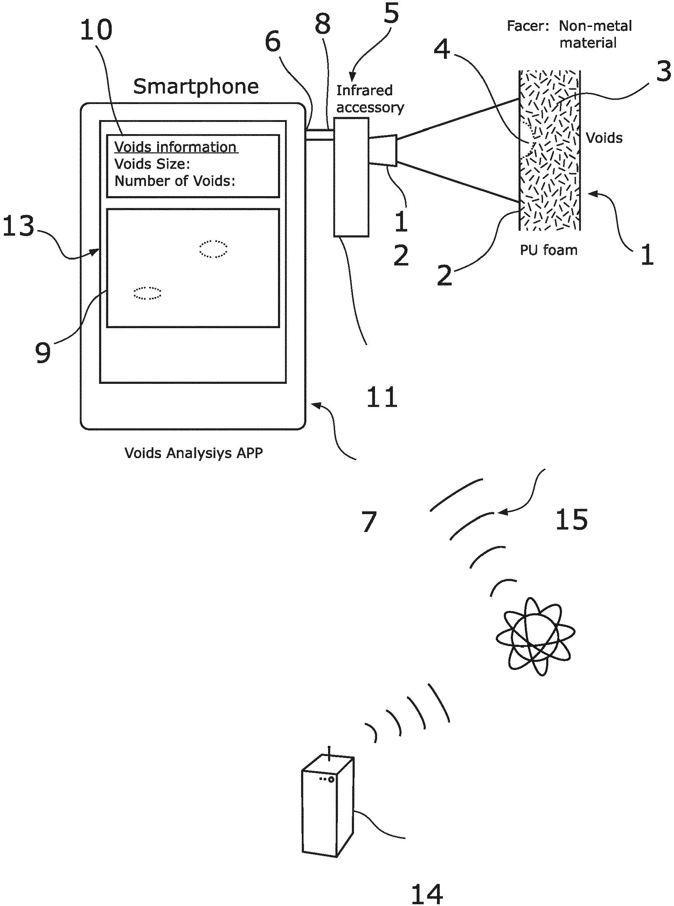

Further advantages and preferred features are discussed in the following description with respect to the Figures. In the following it is shown in
- Fig. 1: a schematic view of a mobile device and an insulation panel of an embodiment of the system according to the invention.

The insulation panel 1 depicted in Fig. 1 has just been produced in an injection molding process. It is to form, along with further insulation panels 1, a component of a refrigerated container. To wit, a precursor mixture comprising a isocyanate and a polyol was injected into the non-metal shell 2 of the insulation panel 1 to form a solid foam interior 3, which in the present example substantially consists of polyurethane. The thus created solid foam interior 3 comprises a number of defects 4, which in the present case are voids within the polyurethane. These defects 4 are to be detected by the method according to the invention. An embodiment of the system according to the invention is depicted in Fig. 1.

A recording apparatus 5, which in this embodiment is an external camera 11 with a thermography lens 12, is releasably connected to a port arrangement 6, which comprises a data port, of a mobile device 7 via a data cable 8. Here the mobile device 7 is a smartphone. Via the port arrangement 6, also other devices such as a charging device may be electrically connected to the mobile device 7.

The camera 11 with the thermography lens 12 captures infrared image data of the shell 2. This infrared image data comprises a sequence of individual infrared images. In the present example, beginning with a starting time 3 minutes after injecting the precursor mixture into the shell 2, an infrared image is captured once every minute for a total of ten minutes. Alternatively, a continuous film of infrared images may be captured for ten minutes.

The infrared image data is then transferred from the camera 11 to the smartphone via the data cable 8 and saved therein, for example in a memory unit.

A mobile application 9 is executed on the smartphone which analyzes the infrared image data and generates a defect detection result 10. In principle, regions on the shell 2 with a lower temperature according to the infrared image data may correspond to voids in the solid foam interior 3 of the insulation panel 1. This is because the reaction in which the solid foam interior 3 is created is exothermic. Thus, the absence of foam results in the absence of heat from the reaction. The size of such regions in turn depends on the size of the voids and their distance to the shell 2. Moreover, the temperature course on the shell as derived from the sequence of infrared images may serve to distinguish different kinds of voids.

This defect detection result 10 is output by a display apparatus 13 of the smartphone. The defect detection result comprises an information table describing the number and size of the detected defects.

In addition, the defect detection result 10 is transmitted to a remote computer server 14 via a mobile data connection 15, which is here a cellular data connection established by the mobile device 7. On the remote computer server 14, the defect detection result 10 is saved. Depending on the currently available bandwidth of the mobile data connection 15, in addition to the defect detection result 10 also the infrared image data itself is transferred to the remote computer server 14. A server application running on the remote computer server 14 can then also analyze the infrared image data and generate a defect detection result of its own. In any case, the server application can associate the defect detection result 10 for the insulation panel 1 with other data, e.g. production data, related to the insulation panel 1 or related to the precursor mixture used to create the solid foam interior 3.

## Claims

1. Method for detecting defects (4) in an insulation panel (1), wherein the insulation panel is produced, which production of the insulation panel (1) comprises injecting a precursor mixture for creating a solid foam interior (3) into a shell (2) of the insulation panel (1), wherein after injecting the precursor mixture into the shell (2) infrared image data of the shell (2) is captured by a recording apparatus (5) and saved in a mobile device (7), which infrared image data is for determining a distribution of the solid foam interior (3) in the shell (2), wherein the infrared image data is analyzed for generating a defect detection result (10) and wherein the defect detection result (10) is output.

2. Method according to claim 1, **characterized in that** the mobile device (7) is a smartphone, in particular, that the recording apparatus (5) is a, preferably integral camera, of the mobile device (7).

3. Method according to claim 1 or 2, **characterized in that** the recording apparatus (5) is separate from the mobile device (7), preferably, that the recording apparatus (5) is an external camera (11) for connection to the mobile device (7).

4. Method according to claim 3, **characterized in that** the recording apparatus (5) is releasably connected to the mobile device (7), in particular, that the recording apparatus (5) is electrically connected to a port arrangement (6) of the mobile device (7), wherein the port arrangement (6) is for connecting external devices to the mobile device (7).

5. Method according to one of claims 1 to 4, **characterized in that** the recording apparatus (5) comprises a camera (11) for recording in the infrared range, preferably, that the recording apparatus (5) generates the infrared image data and transfers the infrared image data to the mobile device (7), in particular, that the infrared image data is transferred to the mobile device (7) via the port arrangement (6), further preferably, that the camera (11) comprises a thermography lens (12).

6. Method according to one of claims 1 to 5, **characterized in that** the recording apparatus (5) transfers the infrared image data to the mobile device (7) via a wireless connection, preferably, that the wireless connection is established by a wireless personal area network.

7. Method according to one of claims 1 to 6, **characterized in that** a mobile application (9) executed on the mobile device (7) analyzes the infrared image data and generates the defect detection result (10), preferably, that the defect detection result (10) comprises a void location information and/or a void size information, in particular, that the defect detection result (10) is output by the mobile device (7).

8. Method according to one of claims 1 to 6, **characterized in that** the mobile device (7) transmits the infrared image data to a remote computer server (14) and that a server application executed on the remote computer server (14) analyzes the infrared image data and generates the defect detection result (10) comprising a void location information and/or a void size information, preferably, that the defect detection result is received by the mobile device (7) from the remote computer server (14).

9. Method according to one of claims 1 to 8, **characterized in that** the infrared image data comprises a plurality of infrared images, preferably, that the plurality of infrared images is successively captured by the recording apparatus (5), in particular, that the plurality of infrared images is captured over a period of time which is at least 5 minutes.

10. Method according to one of claims 1 to 9, **characterized in that** the infrared image data is captured at a recording time which recording time is between 2 minutes and 20 minutes after injecting the precursor mixture, preferably, that the recording time is between 3 and 15 minutes after injecting the precursor mixture.

11. Method according to one of claims 1 to 10, **characterized in that** outputting the defect detection result (10) comprises generating a visual output of the defect detection result (10) on a display apparatus (13) of the mobile device (7), preferably, that outputting the defect detection (10) result comprises in particular wirelessly transmitting the defect detection result (10) to a remote computer.

12. Method according to claim 11, **characterized in that** the defect detection result (10) is associated, in particular by the remote computer, with product information associated with the insulation panel (1), which product information comprises injection process information describing injection process properties obtained during injection of the precursor mixture and/or precursor information describing production properties of the precursor mixture, preferably, wherein the precursor information is generated during a precursor production process of the precursor mixture.

13. Method according to one of claims 1 to 12, **characterized in that** the solid foam interior (3) substantially consists of polyurethane, wherein the precursor mixture comprises an isocyanate and a polyol and optionally water and/or a blowing agent.

14. Method according to one of claims 1 to 13, **characterized in that** the insulation panel (1) is an insulation panel for a refrigerated container, preferably, wherein the insulation panel (1) is comprised by a refrigerated container comprising a plurality of insulation panels (1).

15. System for detecting defects (4) in an insulation panel (1), the system comprising an insulation panel (1) with a solid foam interior (3), which solid foam interior (3) has been created by injecting a precursor mixture into a shell (2) of the insulation panel (1), the system further comprising a recording apparatus (5) for capturing infrared image data of the shell (2) after injecting the precursor mixture into the shell (2), which infrared image data is for determining a distribution of the solid foam interior (3) in the shell (2), the system further comprising a mobile device (7) in which the captured infrared image data is stored.
